# EUROPÄISCHE PATENTSCHRIFT

(11) **EP 0 950 503 B1**
(45) Veröffentlichungstag und Bekanntmachung des Hinweises auf die Patenterteilung: **25.02.2004**
(21) Anmeldenummer: 98105637.7
(22) Anmeldetag: 27.03.1998
(51) Int. Cl.: B29C 69/00

(54) **Verfahren zur Herstellung von thermoplastischen Hohlkörpern**
Method for making thermoplastic hollow bodies
Procédé de fabrication de corps creux en matière thermoplastique

(43) Veröffentlichungstag der Anmeldung: 20.10.1999
(73) Patentinhaber: Siegfried Hofmann GmbH, 96215 Lichtenfels (DE)
(72) Erfinder: Mai, Georg, 96215 Lichtenfels/Schney (DE)
(74) Vertreter: Reinhard - Skuhra - Weise & Partner

(56) Entgegenhaltungen:
- EP-A- 0 158 046
- DE-A- 2 501 291
- US-A- 5 413 743
- PATENT ABSTRACTS OF JAPAN vol. 96, no. 11, 29.November 1996 & JP 08 183061 A (JAPAN STEEL WORKS LTD), 16.Juli 1996,

## Beschreibung

Die Erfindung betrifft ein Verfahren zur Herstellung von thermoplastischen Hohlkörpern nach dem Spritzgießverfahren gemäß dem Oberbegriff des Patentanspruchs 1.

In der DE-OS 25 01 291 ist bereits ein Verfahren zur Herstellung von thermoplastischen Hohlkörpern nach dem Spritzgießverfahren bekannt, bei dem zunächst zwei unterschiedliche Einzelschalen geformt und diese anschließend gleichsinnig miteinander verbunden werden, um eine konvexkonkave Lichtkuppel herzustellen. Hierzu ist ein Spritzgießwerkzeug mit drei hintereinander angeordneten Teilen vorgesehen, wobei das Mittelteil mit den beiden Außenteilen je ein Formnest für die Herstellung jeweils einer Einzelschale bildet.

Sobald die getrennten Einzelschalen hergestellt worden sind, werden die drei Teile des Spritzgießwerkzeugs anschließend auseinander gefahren und das Mittelteil aus dem Fließbereich herausbewegt, wonach die beiden Außenteile in der Weise wieder zusammengefahren werden, dass die beiden Einzelschalen in gleichsinniger Orientierung zu einem Hohlkörper zusammengefügt werden. Zur Verbindung der Einzelschalen wird an der Berührungsnaht der Schalen ein ringförmiges Formnest gebildet und in dieses eine thermoplastische Formmasse eingespritzt.

Als nachteilig ist bei diesem vorbekannten Verfahren anzusehen, dass damit nur kleinvolumige Hohlkörper in einer bestimmten verschachtelten Geometrie hergestellt werden können, weil über die Formgestaltung des Spritzgießwerkzeugteils die Druckkräfte beim verbindenden Umspritzen der Einzelschalen aufgenommen werden müssen. Die Druckkräfte resultieren aus Einspritzdrücken in der Größenordnung von etwa 1000 bar, und demzufolge besitzt bei dieser vorbekannten Vorrichtung das Werkzeugaußenteil im Bereich der Höhlung der unteren Halbschale einen Anlagebereich, der zu Aufnahme von Reaktionskräften entgegengesetzt zur Wirkung der Aufspritzdruckkräfte geeignet ist. Zusätzlich kann zudem bei der Herstellung einer doppelwandigen Kuppelform mit nach außen weisenden übereinanderliegenden Halbschalenrändern gegen Ein- bzw. Auseinanderdrücken der Schalenränder durch den Umspritzdruck eine oberseitige und eine unterseitige Halterrille vorgesehen sein.

Ein Verfahren der eingangs genannten Gattung ist bereits in der JP-A-08 183,061 offenbart. Als nachteilig ist bei diesem vorbekannten Verfahren anzusehen, dass die Herstellung von Hohlkörpern nicht zuverlässig möglich ist, da durch das abkühlungsbedingte Schrumpfen die zur Bindung mit hohem Druck eingespritzte Formmasse in dem Bereich zwischen Werkzeug und den Hohlkörperteil tritt, der keine Haltefläche für ein werkzeugseitiges Hintergreifen aufweist. Hierdurch führt die eingespritzte Formmasse zu einer Verformung wenigstens dieses Hohlkörperteils und dadurch zu Ausschuss.

Mit der Erfindung soll ein Verfahren verfügbar gemacht werden, mit dem in einfacher und zuverlässiger Weise Hohlkörper hergestellt werden können, bei denen das Hohlraumvolumen wenigstens durch die Größe eines Hohlkörperteils bestimmt ist.

Erfindungsgemäß wird diese Aufgabe durch die im Patentanspruch 1 genannten Merkmale gelöst.

Bevorzugte Merkmale, die die Erfindung vorteilhaft weiterbilden, sind den nachgeordneten Verfahrensansprüchen zu entnehmen.

In vorteilhafter Weise können nach dem erfindungsgemäßen Verfahren thermoplastische Hohlkörper ohne nachträglichen Arbeitsgang durch Verkleben, Verschweißen usw. direkt aus einer Spritzgießmaschine erhalten werden. Dabei sorgen die erfindungsgemäß getroffenen Maßnahmen dafür, dass auch bei Einspritzdrücken von etwa 1000 bar und Temperaturen von 200 - 300°C eine problemlose Herstellung von Hohlkörpern möglich ist, die wenigstens das Volumen eines Hohlkörperteils, beispielsweise einer Halbschale, bevorzugt jedoch zweier gegensinnig angeordneter Halbschalen, zur Herstellung eines Auftriebskörpers oder dergleichen, aufweisen.

Hierzu sind in günstiger Weise zum einen Maßnahmen hinsichtlich einer mechanischen Verstärkung im Verbindungs- bzw. Stoß- bzw. Stoßfugenbereich und zum anderen eine spezielle Formgestaltung an wenigstens einem Hohlkörperteil nahe dem Verbindungsbereich vorgesehen, durch die seitens wenigstens eines Werkzeugteils eine direkt entgegenwirkende bzw. diametrale mechanische Abstützung gegen die Spritzgusskräfte im Stoßbereich durch Hintergreifen des Werkzeugs verifiziert wird. Durch diese Maßnahme wird vorteilhaft eine Festigkeitsverlust, der beim Plastifizieren aufgrund der hohen Temperaturen seitens der Umspritzmasse auftritt, wirkungsvoll in dem besonders gefährdeten engsten Verbindungsbereich kompensiert, wobei gleichzeitig auch ein Kühleffekt auftritt. An den Hohlkörperteilen ist im Verbindungsbereich zudem wenigstens eine Anfasung vorgesehen, mit der vorteilhaft ein Materialschwund oder -verzug ausgeglichen werden kann.

Mit dem erfindungsgemäßen Verfahren lassen sich auch problemlos solche Hohlkörper in einer Spritzmaschine herstellen, die bisher wegen der fehlenden Hintergriffsmöglichkeit und damit der Gefahr des Eindrückens im Verbindungsbereich der Halbschalen nicht hergestellt werden konnten.

Die erfindungsgemäß vorgesehenen Halteflächen können dabei vorteilhaft bis auf eine Mindestgröße derart minimiert werden, dass sie an dem fertig hergestellten Hohlkörper kaum mehr sichtbar sind.

Gemäß einer bevorzugten Ausgestaltung der Erfindung ist für die Herstellung eines Hohlkörpers aus einer gewölbten Halbschale und aus einer flachen Schale vorgesehen, dass an der flachen Schale für die horizontale innere Abstützung die Haltefläche an einem abgewindelten Rand gebildet wird. Alternativ kann das Verfahren aus so ausgestaltet sein, dass an der flachen Schale für die horizontale innere Abstützung die Haltefläche als von außen eingeformte Nut gebildet wird, wobei nach einer bevorzugten weiteren Ausgestaltung der Erfindung zwischen dem abwinkeligen Innenrand bzw. der eingeformten Nut und dem unteren Ende der gewölbten Halbschale ein Aufnahmebereich für eine thermoplastische Verbindungsnaht geformt wird. Vorteilhaft wird hier einerseits eine größere Kontaktfläche für das Thermoplastische Verbindungsmaterial erreicht. Außerdem kann damit der Querschnitt des aufzuspritzenden Verbindungsmaterials und damit die Masse desselben vorteilhaft minimiert werden.

Gemäß einer bevorzugten Ausgestaltung des erfindungsgemäßen Verfahrens ist zur Herstellung des Hohlkörpers aus zwei gegensinnig geformten Halbschalen vorgesehen, dass jeweils an den Halbschalen ein materialverstärkter Anlagenkantenbereich mit einem um etwa 180° nach außen umgelegten Abschnitt geformt wird, wobei jeweils die Haltefläche in dem umgelegten Abschnitt gebildet wird und wobei für das Aufspritzen einer Verbindungsnaht die Abschnitte radial mit einer Aufnahmeeinformung versehen werden. Vorteilhaft ist dabei die Breite der Haltefläche etwa in der Wandbreite des Halbschalenmaterials nahe der Stoßkante gestaltet und die Materialstärke des umgelegten Abschnitts wird im Bereich der StoBkante kleiner als im Bereich der Haltefläche geformt. Die thermoplastische Verbindungsnaht wird bevorzugt mit einem annähernd kreisförmigen Querschnitt, vorzugsweise über mehrere Anspritzpunkte, umspritzt, um zum einen die aufzuwendende Menge an thermoplastischem Material zu minimieren und zum anderen eine möglichst von außen unauffällige Verbindungsgestaltung zu realisieren.

Nachfolgend wir die Erfindung unter Bezugnahme auf die beigefügten Zeichnungen näher erläutert.

Es zeigen:
- Figur 1: einen teilweise geschnittene perspektivische Darstellung eines Hohlkörpers aus einer gewölbten Halbschale und einer flachen Schale;
- Figur 2: eine Darstellung gemäß Figur 1 mit einer von außen eingeformten Nut an der flachen Schale; und
- Figur 3: einen nach dem Verfahren hergestellten Hohlkörper aus zwei gegensinnig gewölbten Halbschalen in perspektivischer teilgeschnittener Darstellung.

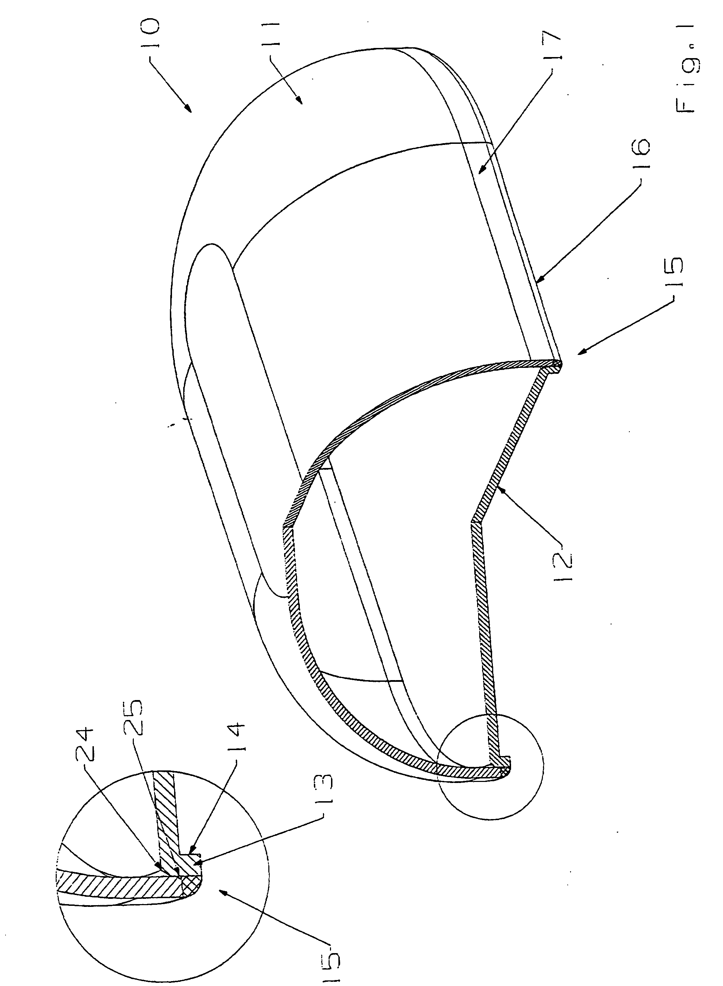

In Figur 1 ist ein Hohlkörper 10 dargestellt, der als Erzeugnis des erfindungsgemäßen Verfahrens aus einer gewölbten Halbschale 11 und einer flachen Schale 12 in einer Spritzgießmaschine hergestellt worden ist. Die flache Schale 12 besitzt einen nach unten bzw. außen abgewinkelten Rand 13, an dem die Haltefläche 14 für ein entsprechend ausgebildetes Werkzeug gebildet ist.

Die Haltefläche 14 liegt genau dem Verbindungsbereich 15 gegenüber, in den mit hohem Druck eine geschlossen umlaufende thermoplastische Verbindungsnaht 16 eingespritzt worden ist.

Die thermoplastische Verbindungsnaht 16 erstreckt sich zwischen dem Außenrand, der teilweise von dem unteren Rand 17 der Halbschale 11 abgedeckt ist und dem unteren Ende der Halbschale 11. Dadurch ist die thermoplastische Verbindungsnaht 16 bei dem Hohlkörper 10 kaum als Verbindung erkennbar und kommt mit einem minimalen Querschnitt zur Erfüllung der Verbindungsfunktion aus.

Der Hohlkörper 10 wurde auf diese Weise problemlos in der Spritzgießmaschine hergestellt, ohne daß ein nachträglicher separater Arbeitsgang durch Verkleben, Verschweißen oder dgl. erforderlich war.

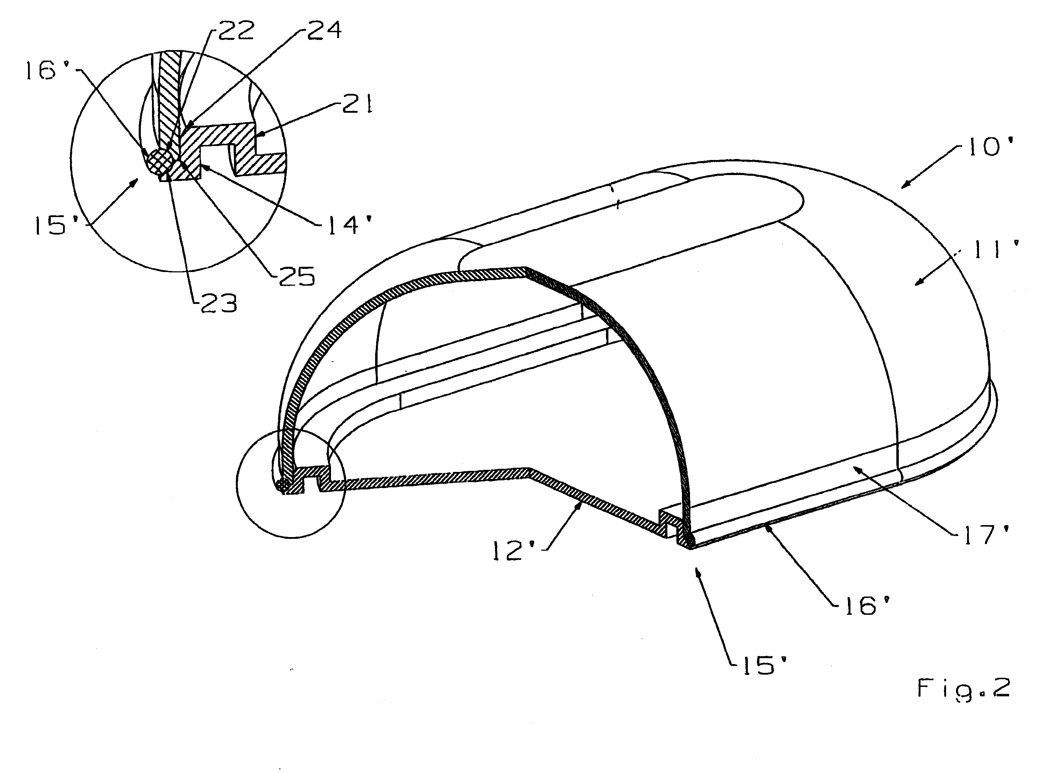

Die vorgesehene Form des Hohlkörpers 10 wurde ohne irgendeine Formbeeinträchtigung im Verbindungsbereich 15 schnell und reproduzierbar hergestellt, wobei zur Erleichterung der überlappenden Hohlkörperteilrand-Zusammenführung, ebenso wie bei Figur 2, Anfasungen 24 und 25 vorgesehen sind.

Figur 2 zeigt einen ähnlichen Hohlkörper 10', bei dem abweichend von dem in Figur 1 dargestellten Ausführungsbeispiel die flache Halbschale mit einer von außen nach innen eingeformten Nut 21 im Verbindungsbereich geformt ist, an der die Haltefläche 14' für ein werkzeugseitiges Hintergreifen entgegen der Aufspritzdruckkraft für die umlaufende thermoplastische Verbindungsnaht 16' vorgesehen ist. Der Verbindungsbereich 15' zeigt nicht nur eine thermoplastische Verbindungsnaht 16' mit einem etwa kreisförmigen Querschnitt, sondern auch einen viertelkreisbogenförmig eingeformten Aufnahmeabschnitt 22 an dem unteren Ende 17' der oberen Halbschale und eine viertelkreisbogenförmige Einformung 23 am Außenrand der flachen Schale 12'.

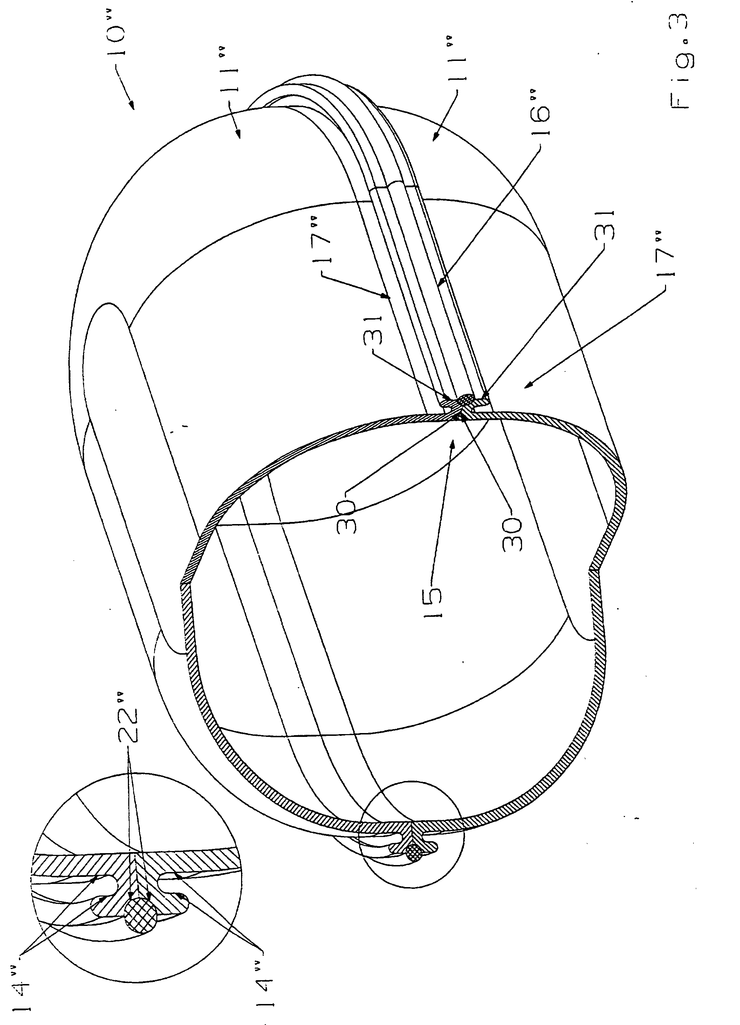

In Figur 3 ist eine teilgeschnittene Darstellung eines Körpers 10'' gezeigt, der aus zwei gleichen gegensinnig gewöbten Halbschalen 11'' nach dem erfindungsgemäßen Verfahren hergestellt worden ist. Die beiden Halbschalen 11'' besitzen jeweils an ihrem zueinanderweisenden Ende 17'' einen materialverstärkten Anlagekantenbereich 30 mit einem um etwa 180° nach außen umgelegten Abschnitt 31. Die Halteflächen 14' sind dabei jeweils an dem umgelegten Abschnitt 31 gebildet worden, und für das Aufspritzen einer thermoplastischen Verbindungsnaht 16'' sind die umgelegten Abschnitte 31 radial mit einer viertelkreisförmigen Aufnahmeeinformung 22'' versehen. Die thermoplastische Verbindungsnaht 16'' besitzt einen annähernd kreisförmigen Querschnitt.

Auch der Hohlkörper 10'' aus zwei gegensinnig gewölbten Halbschalen 11'' läßt sich problemlos, schnell und kaum von außen sichtbar ohne Gefährdung der Hohlform ebenso nach dem erfindungsgemäßen Verfahren mit sicherer Dichtheit herstellen.

## Patentansprüche

1. Verfahren zur Herstellung von thermoplastischen Hohlkörpern nach dem Spritzgießverfahren, wobei in einem Spritzgießwerkzeug zwei Hohlkörperteile (11, 12, 11', 12', 11") gebildet, nach ihrem Erstarren zusammengeführt und mit einer Naht (16, 16', 16") aus thermoplastischer Formmasse zur Verbindung mit hohem Druck umspritzt werden, und wobei an wenigstens einem Hohlkörperteil (12, 12', 11") nahe dem Verbindungsbereich (15, 15') eine den Hohlkörper gegen Verformungen infolge des Einwirkens der hohen Umspritzdrücke abstützende umlaufende Haltefläche (14, 14', 14") für ein werkzeugseitiges. Hintergreifen angeformt wird,
**dadurch gekennzeichnet, dass** an wenigstens einem der beiden Hohlkörperteile (11, 12, 11', 12', 11'') an dessen Verbindungsbereich (15, 15') eine materialverstärkte Anlage-Stoßkante zum Schwundausgleich angeformt wird.

2. Verfahren nach Anspruch 1, bei dem der Hohlkörper (10) aus einer gewölbten Halbschale (11) und aus einer flachen Schale (12) hergestellt wird,
**dadurch gekennzeichnet,**
**dass** an der flachen Schale (12) für die horizontale innere Abstützung die Haltefläche (14) an einem nach außenabgewinkelten Rand (13) gebildet wird.

3. Verfahren nach Anspruch 1, bei dem der Hohlkörper (10') aus einer gewölbten Halbschale (11') und aus einer flachen Schale (12) hergestellt wird,
**dadurch gekennzeichnet,**
**dass** an der flachen Schale (12') für die horizontale innere Abstützung die Haltefläche (14') als von außen eingeformte Nut (21) gebildet wird.

4. Verfahren nach Anspruch 2 oder 3,
**dadurch gekennzeichnet,**
**dass** zwischen dem abgewinkelten Innenrand (13') der flachen Schale (12, 12') und dem unteren Ende (17) der gewölbten Halbschale (11, 11') ein Aufnahmebereich (22, 23) für eine thermoplastische Verbindungsnaht (16) geformt wird.

5. Verfahren nach einem der Ansprüche 2 bis 4,
**dadurch gekennzeichnet,**
**dass** an dem nach außen abgewinkelten Rand (13) bzw. an der von außen eingeformten Nut (21) der flachen Schale (12, 12') oder/und an dem unteren Innenrand der Halbschale (11, 11') eine Anfasung (24, 25) gebildet wird.

6. Verfahren nach Anspruch 1, bei dem der Hohlkörper (10') aus zwei gegensinnig gewölbten Halbschalen (11'') hergestellt wird,
**dadurch gekennzeichnet,**
**dass**, jeweils an den Halbschalen (11'') ein materialverstärkter Anlagenkantenbereich (30) mit einem um etwa 180° nach außen umgelegten Abschnitt (31) geformt wird,
wobei jeweils die Haltefläche (14'') an dem umgelegten Abschnitt (31) gebildet wird, und
wobei für das Aufspritzen einer thermoplastischen Verbindungsnaht (16") die Abschnitte (31) radial mit einer Aufnahmeeinformung (22") versehen werden.

7. Verfahren nach Anspruch 6,
**dadurch gekennzeichnet,**
**dass** die Breite der Haltefläche (14") etwa in der Wandstärke der Halbschale (11'') nahe der Stoßkante gestaltet wird.

8. Verfahren nach Anspruch 6 oder 7,
**dadurch gekennzeichnet,**
**dass** die Materialstärke des umgelegten Abschnitts (31) im Bereich der Stoßkante kleiner als im Bereich der Haltefläche (14 ") geformt wird.

9. Verfahren nach einem der vorangehenden Ansprüche,
**dadurch gekennzeichnet,**
**dass** die Verbindungsnaht (16, 16', 16") mit einem annähernd kreisförmigen Querschnitt umspritzt wird.

10. Verfahren nach einem der vorangehenden Ansprüche,
**dadurch gekennzeichnet,**
**dass** die Umspritzung zur Verbindung der beiden Hohlkörperteile (11, 12, 11', 12', 11'') über wenigstens zwei Anspritzpunkte vorgenommen wird.

## Claims

1. Method for making thermoplastic hollow bodies in accordance with the injection-moulding technique, wherein two parts of the hollow body (11, 12, 11', 12', 11") are formed in an injection-moulding tool, are joined with each other after solidification and connected by squirting a seam (16, 16', 16") of thermoplastic moulding substance around them at a high pressure, and wherein a circumferential holding area (14, 14', 14") is moulded on at least one part of the hollow body (12, 12', 11") in the vicinity of the connecting zone (15, 15'), which supports the hollow body against deformation caused by the action of the high injection pressures, for rear engagement on the tool side,
**characterised in that** a abutting face edge with reinforced material is moulded on the connecting zone (15, 15') on at least one of said two parts of the hollow body (11, 12, 11', 12', 11") for compensation of shrinkage.

2. Method according to Claim 1, wherein said hollow body (10) is made of an arcuate semi-shell (11) and a flat shell (12),
**characterised in**
**that** said holding area (14) is formed on an outwardly bent edge (13) on said flat shell (12) for the horizontal inner support.

3. Method according to Claim 1, wherein said hollow body (10') is made of an arcuate half-shell (11') and a flat shell (12),
**characterised in**
**that** said holding area (14') is formed on said flat shell (12') in the form of a groove (21) moulded from the outside for the horizontal inner support.

4. Method according to Claim 2 or 3,
**characterised in**
**that** a receiving zone (22, 23) for receiving a thermoplastic connecting seam (16) is formed between said bent inner edge (13') of said flat shell (12, 12') and the lower end (17) of said arcuate half-shell (11, 11').

5. Method according to any of the Claims 2 to 4,
**characterised in**
**that** a chamfer (24, 25) is formed on said outwardly bent edge (13) or on said groove (21) moulded from the outside on said flat shell (12, 12') or/and on the lower inner edge of said half-shell (11, 11').

6. Method according to Claim 1, wherein said hollow body (10') is made of two half-shells (11") arcuate in opposite directions,
**characterised in**
**that** a respective abutting edge zone (30) with reinforcing material is moulded on said half-shells (11') with a section (31) bent to the outside by roughly 180°,
with said holding area (14") being formed on said bent section (31), and
with said sections (31) being radially provided with a receiving recessed portion (22") for squirting a thermoplastic connecting seam (16").

7. Method according to Claim 6,
**characterised in**
**that** the width of said holding area (14") is configured roughly with the wall thickness of said half-shell (11") in the vicinity of said face edge.

8. Method according to Claim 6 or 7,
**characterised in**
**that** the thickness of the material of said bent section (31) is formed to be smaller in the region of said face edge than in the region of said holding area (14").

9. Method according to any of the preceding Claims,
**characterised in**
**that** said connecting seam (16, 16', 16") is squirted at an approximately circular cross-section.

10. Method according to any of the preceding Claims,
**characterised in**
**that** squirting for joining said two parts of the hollow body (11, 12, 11', 12', 11") is carried out over at least two runner connector points.

## Revendications

1. Procédé de fabrication de corps thermoplastiques creux selon le procédé de moulage par injection, dans lequel deux parties de corps creux (11, 12, 11', 12', 11") sont formées dans un moule de coulée par injection et sont réunies après leur solidification, une ligne de joint (16, 16', 16") en une matière thermoplastique moulable étant injectée tout autour sous haute pression pour assurer la liaison, tandis qu'il est prévu, formée d'un seul tenant au niveau d'au moins une partie de corps creux (12, 12', 11") à proximité de la zone de jonction (15, 15'), une surface périphérique de support (14, 14', 14") soutenant le corps creux contre des déformations du fait de l'influence des pressions d'injection élevées pour une prise par derrière du côté moule,
**caractérisé en ce qu'**il est prévu, formé d'un seul tenant au niveau d'au moins l'une des deux parties de corps creux (11, 12, 11', 12', 11") à la zone de jonction (15, 15') de celle-ci, un rebord de contact, renforcé par une matière et destiné à compenser le retrait.

2. Procédé selon la revendication 1, dans lequel le corps creux (10) est fabriqué à partir d'une demi-coque bombée (11) et d'une coque plate (12),
**caractérisé en ce que** la surface de support (14), prévue pour le soutien intérieur horizontal, est formée, au niveau de la coque plate (12), sur un bord (13) coudé vers l'extérieur.

3. Procédé selon la revendication 1, dans lequel le corps creux (10') est fabriqué à partir d'une demi-coque bombée (11') et d'une coque plate (12'),
**caractérisé en ce que** la surface de support (14'), prévue pour le soutien intérieur horizontal, est formée, au niveau de la coque plate (12'), en tant que rainure (21) moulée depuis l'extérieur.

4. Procédé selon la revendication 2 ou 3,
**caractérisé en ce qu'**il est prévu, entre le bord intérieur coudé (13') de la coque plate (12, 12') et l'extrémité inférieure (17) de la demi-coque bombée (11, 11'), une zone de réception (22, 23), formée pour une ligne de joint de liaison thermoplastique (16).

5. Procédé selon l'une des revendications 2 à 4,
**caractérisé en ce qu'**il est prévu un biseau (24, 25), qui est formé au niveau du bord coudé vers l'extérieur (13) ou bien au niveau de la rainure (21) moulée depuis l'extérieur de la coque plate (12, 12') et/ou au niveau du bord intérieur inférieur de la demi-coque bombée (11, 11').

6. Procédé selon la revendication 1, dans lequel le corps creux (10') est fabriqué à partir de deux demi-coques (11") bombées en sens inverse,
**caractérisé en ce qu'**une zone de bord de contact (30) renforcée par une matière est formée, chaque fois au niveau des demi-coques (11"), avec une partie (31) repliée vers l'extérieur sur environ 180°,
la surface de support (14") étant chaque fois formée au niveau de la partie repliée (31), et
les parties (31) étant radialement pourvues d'un évidement moulé de réception (22") pour la projection d'une ligne de joint de liaison thermoplastique (16").

7. Procédé selon la revendication 6,
**caractérisé en ce que** la largeur de la surface de support (14") est formée à peu près dans l'épaisseur de paroi de la demi-coque (11"), à proximité du rebord de contact.

8. Procédé selon la revendication 6 ou 7,
**caractérisé en ce que** l'épaisseur de matière de la partie repliée (31) est plus petite dans la zone du rebord de contact que dans la zone de la surface de support (14").

9. Procédé selon l'une des revendications précédentes,
**caractérisé en ce que** la ligne de joint de liaison (16, 16', 16") est injectée tout autour avec une section transversale approximativement circulaire.

10. Procédé selon l'une des revendications précédentes,
**caractérisé en ce que** l'injection effectuée tout autour pour la liaison des deux parties de corps creux (11, 12, 11', 12', 11") est exécutée par l'intermédiaire d'au moins deux points d'injection.
